# FASCICULE DE BREVET EUROPEEN

(11) **EP 1 119 967 B1**
(45) Date de publication et mention de la délivrance du brevet: **21.01.2004**
(21) Numéro de dépôt: 99970237.6
(22) Date de dépôt: 05.10.1999
(51) Int. Cl.: H04N 5/445

(54) **PROCEDE ET DISPOSITIF DE GESTION DE DONNEES DE SERVICE DANS UN SYSTEME DE TELEVISION**
VERFAHREN UND VORRICHTUNG ZUR VERWALTUNG VON DIENSTEDATEN IN EINEM FERNSEHSYSTEM
METHOD AND DEVICE FOR SERVICE DATA MANAGEMENT IN A TELEVISION SYSTEM

(30) Priorité: 05.10.1998 FR 9812465
(43) Date de publication de la demande: 01.08.2001
(73) Titulaire: THOMSON multimedia, 92100 Boulogne Billancourt (FR)
(72) Inventeur: CHEVALLIER, Louis, 92648 Boulogne Cedex (FR); DEHOUX, Olivier, 92648 Boulogne Cedex (FR); DENIAU, Eric, 92648 Boulogne Cedex (FR)
(74) Mandataire: Kohrs, Martin
(86) Numéro de dépôt international: PCT/FR1999/002380
(87) Numéro de publication internationale: WO 2000/021285

(56) Documents cités:
- EP-A- 0 823 798
- US-A- 5 559 550
- US-A- 5 635 978

## Description

L'invention concerne la diffusion et la réception d'applications multimédia ou d'émissions audiovisuelles diffusées et plus particulièrement un procédé et un dispositif de navigation et de sélection de services ou chaînes audiovisuels. Ces dispositifs et procédés peuvent être basés sur la signalisation qui accompagne les données des services ou chaînes audiovisuels. Un exemple d'une telle signalisation est la norme 'DVB Service Information'.

Dans le monde actuel de l'audiovisuel, la multiplication des chaînes et services a pour effet d'offrir à l'utilisateur un choix de plus en plus important et de plus en plus complexe. Important en nombre de sorte que les chaînes et services proposés peuvent dépasser la centaine. Complexe dans leur dénomination de sorte que l'utilisateur ne peut retenir le nom de tous les chaînes et services. La simple association entre un nombre correspondant au numéro de la chaîne ou du service avec son contenu n'est pas simple quand le nombre de chaînes et de services excède une certaine limite. Dès lors, l'utilisateur ne peut lui-même mémoriser tous les chaînes et services ni même ordonner ces chaînes ou services dans son esprit.

Cette multiplication de chaînes et de services s'est développée grâce aux progrès techniques aussi bien dans les moyens de transmission que dans les moyens de réception des applications multimédia. En effet, les informations correspondant aux applications multimédia sont transmises par multiplexage de paquets de données dans le flux de données numériques permettant ainsi d'augmenter la capacité de transmission et réception des données.

Afin de permettre à l'utilisateur de « naviguer » et d'effectuer son choix parmi les chaînes ou services qui lui sont proposés, un guide de programme électronique est à sa disposition. Ce guide de programmes communément appelé « EPG » ou «electronic program guide », est une application logicielle qui peut être utilisée dans un environnement de télévision aussi bien numérique qu'analogique.

L'environnement de la télévision numérique dont s'inspire la présente invention est décrit de manière détaillée dans les spécifications du standard DVB (digital vidéo broadcasting). On peut se référer par exemple aux spécifications DVB établies par l'ETSI (European Telecommunications Standards Institute) publiées en septembre 1997 sous la référence EN 300 468 - v1.3.1 ou sous la référence REN/JTC-00DVB-43.

Selon ce standard DVB, les informations concernant les programmes et les événements diffusés sont contenues dans les informations de service ou, en termes anglais, les « service information SI ». Elles sont diffusées périodiquement en fonction de la bande passante disponible et de la fréquence des demandes d'informations de la part de l'utilisateur.

Dans le cadre de la présente invention, l'utilisateur peut « naviguer » et effectuer son choix au moyen des touches de programme P+ ou P- de la télécommande. Ces touches de programme permettent soit d'incrémenter soit de décrémenter le numéro de la chaîne ou du service en cours de visualisation sans avoir à appuyer sur la touche correspondant au numéro.

L'incrémentation ou la décrémentation peut s'effectuer de manière ponctuelle; isolée. Mais elle peut s'effectuer aussi de manière continue en maintenant la touche de programme P+ ou P- appuyée. Dans ce dernier cas, le choix de la chaîne ou du service n'est déterminé que lors du relâchement de la pression sur les touches P+ ou P-, ce zapping est communément appelé le « zapping virtuel » ou bien en terme anglais le « continuous surfing ». Ce zapping virtuel existe à l'heure actuelle mais dans un environnement ou le nombre de choix est limité et avec une efficacité et une maniabilité réduite.

Par conséquent, afin de permettre à ce zapping virtuel de répondre aux exigences de l'utilisateur, il est nécessaire d'implémenter un dispositif et un procédé de navigation et de sélection de services ou chaînes audiovisuels qui fonctionnent aussi bien dans l'environnement numérique que dans l'environnement analogique.

Une première contrainte à laquelle doit répondre ce dispositif et ce procédé de navigation et de sélection est de disposer d'une mémoire facilement accessible et capable de changer en fonction du flux de données diffusé par l'émetteur afin de donner une image stable pour l'interface utilisateur et de fournir les informations en temps voulu.

Une seconde contrainte réside dans la gestion des informations reçues de l'émetteur et restituées à l'utilisateur, car le zapping virtuel nécessite une taille de mémoire importante et une gestion rapide afin de faire face aux changements de flux.

Une troisième contrainte réside dans la gestion de l'incohérence qui peut apparaître transitoirement dans les changements des flux de données.

Le brevet US-A-5 635 978 décrit un système de transmission d'un guide électronique des programmes de télévision à partir d'un émetteur vers un récepteur situé dans la régie d'un système de diffusion par câble.

Le récepteur dispose d'une base de données pour le stockage des informations relatives au guide des programmes.

### Résumé de l'invention

Un des buts de l'invention est de donner une image stable des flux de données transmis tout en étant aussi fidèle que possible à la réalité.

L'invention a pour objet un procédé de gestion de données de service dans un système de télévision dans lequel sont transmises lesdites données de service, comportant une étape d'acquisition de données de service contenant au moins une liste de services diffusés et une étape de stockage des données acquises dans une première base de données (300.1) d'un récepteur caractérisé en ce qu'il comporte les étapes : caractérisé en ce qu'il comporte en outre les étapes :
- de copie de données de service stockées dans, ladite première base de données vers une seconde base de données (300.2) du récepteur pour la mise à jour de ladite seconde base, copie suspendue pendant l'acquisition d'une nouvelle liste de services ; ladite seconde base de données possédant la même structure que la première;
- de mise à disposition des données stockées dans ladite seconde base de données à au moins une application dudit récepteur.

L'utilisation d'une double base de données, l'une destinée à l'acquisition, l'autre à la restitution auprès d'applications locales, avec mise à jour sélective de la base de restitution par la base d'acquisition permet de présenter une image cohérente des informations de service à une application.

Selon un mode de réalisation particulier, la mise à jour de la seconde base de données est effectuée immédiatement après acquisition d'une nouvelle liste de services.

Selon le type de donnée, la mise à jour de la base d'acquisition peut être immédiate ou pas. Selon l'exemple de réalisation particulier exposé plus loin, les données relatives à l'adresse d'un service sont mises à jours immédiatement, tandis que les données moins prioritaires et importantes, ou des informations non directement présentées à l'utilisateur, telles que des résumés ou des horaires de diffusion, sont mises à jour à des moments particuliers, en vue de ne pas gêner la cohérence des informations présentées, par exemple, dans le cadre d'un guide électronique de programmes.

Selon un mode de réalisation particulier, la mise à jour de la seconde base de données est effectuée après un intervalle de temps prédéterminé après une requête de mise à jour d'une nouvelle liste de services.

La mise en oeuvre d'une mise à jour après un certain intervalle de temps permet de mettre la base de restitution à jour si l'attente des informations à acquérir devient trop longue.

Selon un mode de réalisation particulier, la mise à jour de la seconde base de données est effectuée uniquement suite à une requête d'une application.

Ainsi, le contrôle des mises à jour est laissé à l'appréciation d'une application, ce qui permet une gestion flexible et différente de ces mises à jour en fonction des besoins et contraintes d'une application particulière.

Selon un mode de réalisation particulier, la mise à jour selon l'un des modes ci-dessus dépend du type de la donnée de service.

Selon un mode de réalisation particulier, le procédé comporte en outre les étapes :
- d'acquisition de la liste des services diffusés et d'informations supplémentaires relatives aux services de ladite liste ;
- de stockage des informations dans la première base de données et de mise à jour de la seconde base de données ;
- en cas de détection de changement d'un service, acquisition de nouvelles informations supplémentaires relatives à ce service et suspension de la mise à jour de la seconde base avec les nouvelles informations supplémentaires jusqu'à une requête d'une application.

L'invention a aussi pour objet un récepteur de télévision dans un système de télévision à transmission de données de service, caractérisé en qu'il comprend :
- des moyens d'acquisition de données de service comprenant au moins une liste de services diffusés ;
- des moyens de stockage de données de service dans une première base de données ;
- des moyens de stockage de données de service dans une seconde base de données, ladite seconde base de données possédant la même structure que la première base de données ;
- des moyens de suspension de la mise à jour de la seconde base de données à partir de la première base de données, la suspension s'effectuant pendant l'acquisition d'une nouvelle liste de services.

D'autres caractéristiques et avantages de l'invention apparaîtront à travers la description d'un mode de réalisation non limitatif. Ce mode de réalisation est illustré par les figures ci-jointes.

### Description des figures

La figure 1 est un schéma bloc d'un récepteur-décodeur mettant en oeuvre le procédé selon l'exemple de réalisation.
La figure 2 représente une vue générale de l'environnement de l'invention et notamment de la situation du middleware dans l'architecture du software.
La figure 3 est une représentation de la base de donnée du service serveur et ses inter-relations avec les éléments logiciels du système.
La figure 4 montre une représentation du service serveur en modèle objet avec ses composants et ses liens avec des composants externes. Le service serveur est la partie du middleware qui est principalement concernée par le zapping virtuel.
La figure 5 représente l'architecture interne de la base de données du service serveur ainsi que ses liens avec les flux de données.

### Description détaillée de l'invention

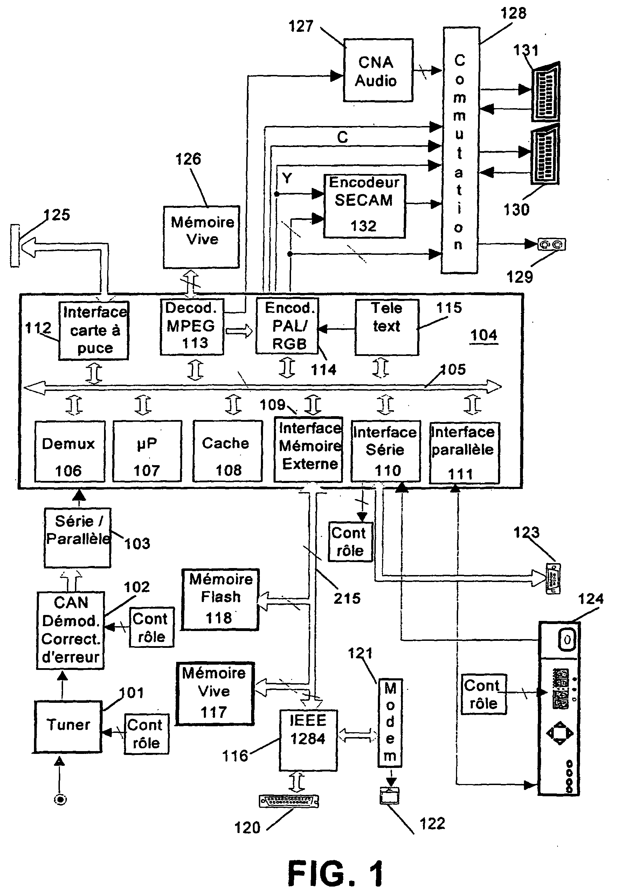

La figure 1 est un diagramme bloc d'un récepteur/décodeur d'un signal de télévision numérique. Le dispositif comporte un tuner 101 relié à un circuit de démodulation et de correction d'erreur 102 qui comporte également un convertisseur analogique-numérique pour numériser les signaux en provenance du tuner. Selon le type de réception, câble ou satellite, la modulation utilisée est de type QAM ou QPSK, et le circuit 102 comporte les moyens de démodulation appropriés au type de réception. Les données démodulées et corrigées sont sérialisées par un convertisseur 103, connecté à une entrée série d'un circuit de démultiplexage et de décodage 104.

Selon le présent exemple, ce circuit 104 est un circuit STi5500 fabriqué par ST Microelectronics. Ce dernier comporte, reliés à un bus parallèle 32 bits central 105, un démultiplexeur DVB 106, un microprocesseur 107, une mémoire cache 108, une interface mémoire externe 109, une interface de communication série 110, une interface entrée/sortie parallèle 111, une interface de carte à puce 112, un décodeur MPEG audio et vidéo 113, un encodeur PAL et RGB 114 et un générateur de caractères 115.

L'interface mémoire externe 109 est reliée à un bus parallèle 16 bits, auquel sont reliés respectivement une interface parallèle 116 de type IEEE 1284, une mémoire vive 117 et une mémoire 'Flash' 118. L'interface parallèle 116 est également connectée à un connecteur externe 120 et à un modem 121, ce dernier étant relié à un connecteur externe 122.

L'interface de communication série 110 est reliée à un connecteur externe 123, ainsi qu'à la sortie d'un sous-ensemble de réception infrarouge 124 destiné à recevoir des signaux d'une télécommande non-illustrée. Le sous-ensemble de réception infrarouge est intégré dans un panneau frontal du décodeur, qui comporte également un dispositif d'affichage et des touches de commande.

L'interface de carte à puce 112 est reliée à un connecteur de carte à puce 125.

Le décodeur audio et vidéo 113 est relié à une mémoire vive 126 de 16 Mbit, destinée à stocker les paquets audio et vidéo non décodés. Le décodeur transmet les données vidéo décodées à l'encodeur PAL et RGB 114 et les données audio décodées vers un convertisseur numérique-analogique 127. L'encodeur fournit les signaux RGB à un encodeur SECAM 132, et fournit également un signal vidéo sous la forme d'une composante luminance Y et d'une composante chrominance C, ces deux composantes étant séparées. Ces différents signaux sont multiplexés à travers un circuit de commutation 128 vers des sorties audio 129, télévision 130 et magnétoscope 131.

Le cheminement des données audio et vidéo dans le décodeur est le suivant : le flux de données démodulé possède un format de flux de transport, aussi appelé 'Transport Stream' ou plus simplement 'TS' en référence au standard MPEG II Systèmes. Ce standard possède la référence ISO/IEC 13818-1. Les paquets TS comportent dans leur en-tête des identificateurs appelés PID qui indiquent à quel flux élémentaire se rapportent les données utiles du paquet. Typiquement, un flux élémentaire est un flux vidéo associé à un programme particulier, tandis qu'un flux audio de ce programme en est un autre. La structure de données utilisée pour transporter les données audio et vidéo compressées est appelée paquet de flux élémentaire ou encore paquet 'PES'.

Le démultiplexeur 106 est programmé par le microprocesseur 107 pour extraire du flux de transport les paquets correspondant à certaines valeurs de PID. Les données utiles d'un paquet démultiplexé sont le cas échéant désembrouillées (si les droits stockés par une carte à puce de l'utilisateur autorisent ce désembrouillage), avant de stocker ces données dans des zones tampon des diverses mémoires du décodeur. Les zones tampon réservées aux paquets PES audio et vidéo sont situées dans la mémoire 126. Le décodeur 113 relit ces données audio et vidéo selon ses besoins, et transmet les échantillons audio et vidéo décompressés respectivement à l'encodeur 114 et au convertisseur 127.

Certains des circuits mentionnés ci-dessus sont contrôlés de manière connue, par exemple à travers un bus de type I2C.

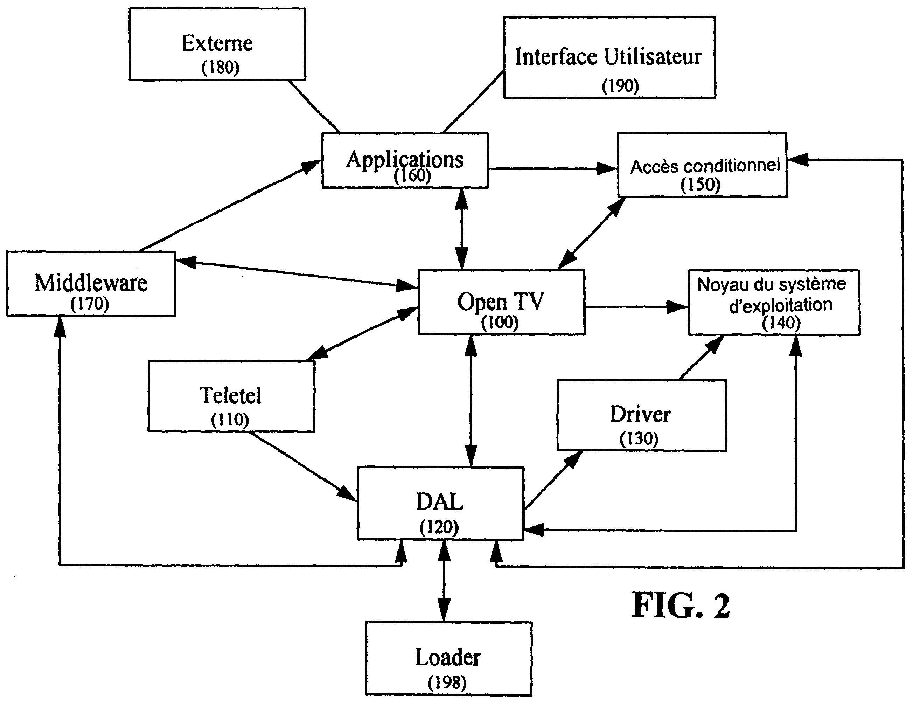

La figure 2 représente une implémentation du middleware du décodeur dans l'architecture du software (ou logiciel global du système) qui est fondée sur l'OpenTV (nom commercial d'un système de télévision interactive). Le middleware est défini comme étant la partie du logiciel située juste en dessous de l'interface utilisateur. Sa structure ne découle pas du type de navigation et il est tenu de fournir les moyens de contrôle et les données nécessaires à cette interface utilisateur. Cette figure donne une illustration statique et dynamique de l'implémentation.

Selon le présent exemple de réalisation, le récepteur de télévision comprend des applications (160) comportant d'une part une application interface utilisateur (190) et d'autre part des applications dites externes (180). Les applications communiquent avec le middleware (170) et d'autre part avec un module de contrôle d'accès (150). Ces deux derniers communiquent par ailleurs avec un module OpenTV (100).. Dans cette configuration où l'élément central est le module Open TV, ce dernier communique avec un module télétel (110), un module d'adaptation de drivers (120), et avec un noyau du système d'exploitation ('OS Kernel') (140). Le module d'adaptation de drivers (120) est par ailleurs connecté au module des drivers (130), à l'OS Kernel et au module d'accès conditionnel. Il communique également avec un logiciel chargeur (loader) (198) qui permet d'amorcer le démarrage du système.

Dans la présente configuration, le module de l'OpenTV (100) intègre d'une part l'interpréteur pour les applications multimédia et d'autre part les bibliothèques consacrées à la télévision interactive comme les fonctions d'affichage de graphiques, les fonctions de gestion des interactions, les piles de diffusion, les piles de communication, etc. Tout autre système présentant les mêmes fonctions peut tout aussi bien le remplacer.

Les signaux numériques qui sont transmis au récepteur sont sous forme de paquets. Ils sont séparés pour représenter chacun un type d'information ou simplement une « voie ». Ainsi les signaux de télévision numérique comportent une voie vidéo, une voie audio et une « voie de service ». C'est dans cette voie de service que sont prévues des tables d'informations des événements communément appelées « service information ».

Dans un environnement numérique, chaque flux regroupe une pluralité de « services » qui peuvent être à leur tour regroupés dans un bouquet numérique pouvant rassembler des « services » de plusieurs diffuseurs. Par conséquent, dans cet environnement complexe, il est souhaitable que les signaux émis pour chaque « service » contiennent des informations qui peuvent être extraites directement.

L'environnement décrit ci-dessus est cité à titre d'exemple. La présente invention peut être utilisée dans un autre environnement dans lequel les notions de « services » ou de bouquets sont remplacées par d'autres notions, du moment que les signaux reçus par les abonnées contiennent les informations qui permettent d'identifier les « services », « programmes », « émissions » ou « événements » qu'ils reçoivent.

Le standard MPEG-2 Systèmes, avec le standard DVB-Sl, donne un exemple d'organisation générale des « services information » dans un contexte de télévision numérique européenne. Ce contexte est illustré uniquement à titre d'exemple pour la compréhension de la présente invention.

Les tables les plus typiquement utiles pour le zapping virtuel sont la NIT, BAT pour la liste des services, SDT pour les noms des services et EIT pour les noms des événements. Le « service d'information » (Sl) qui est principalement constitué de ces tables fournit entre autres des informations qui sont les suivantes :
- Une table d'association de bouquet « BAT » qui fournit les informations relatives aux bouquets comme le nom des « services » qui sont fournis.
- Une table NIT, qui donne principalement des informations sur les caractéristiques physiques du flux (fréquences sur lesquelles sont émis les différents flux).
- Une table de description des « services » (SDT) qui contient les données décrivant les « services » dans le système.
- Une table d'information des événements « EIT » qui contient les données sur les événements ou programmes comme le nom, le début, la durée etc.
- Une table des statuts courant « RST » qui donne l'état ('en cours de diffusion' ou 'non en cours de diffusion') d'un événement.
- Une table agenda « TDT » qui donne des informations sur l'heure courante et la date. Cette table est mise à jour de manière à s'adapter aux heures locales et à être exacte.

Cette description n'est pas exhaustive, d'autres tables peuvent être mises en place pour contenir d'autres informations qui sont utiles dans le cadre de la présente invention. Par ailleurs, on se référera aux standards précités pour des renseignements plus précis sur les différentes tables, leur structure et leur contenu.

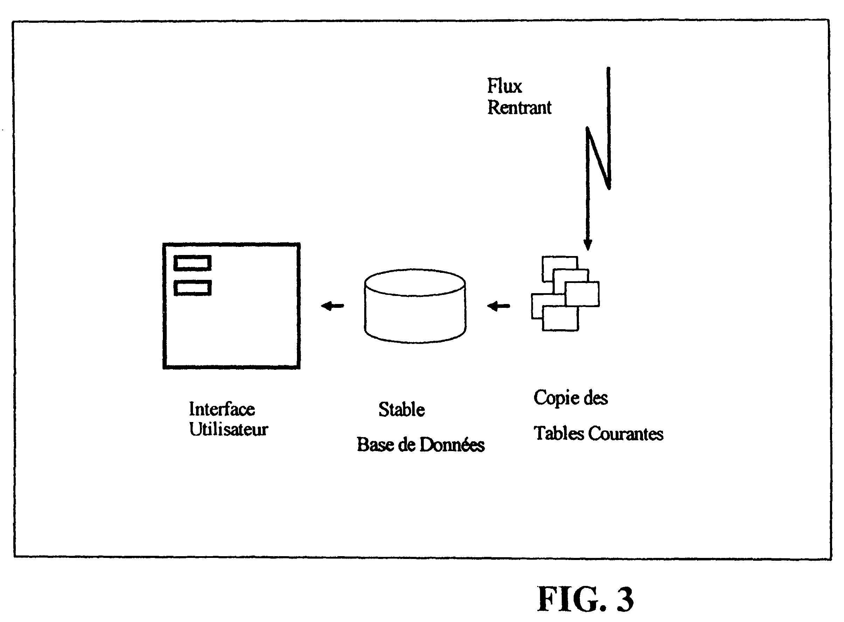

La figure 3 représente la base de données du service serveur et ses relations avec les éléments logiciels du système dans l'exécution de la fonction du zapping virtuel.

Le zapping virtuel dont la fonction a été précédemment expliquée, permet à l'utilisateur de faire défiler un à un les chaînes ou services de manière croissante ou décroissante dans un menu sans pour autant faire visualiser le programme ou l'événement sur l'écran du téléviseur. Ce défilement est de l'ordre de 0,4 secondes par chaîne ou service. Quand la pression des touches de programmes P+ ou P- est relâchée, la connexion est établie (c'est à dire que le démultiplexeur est programmé pour démultiplexer les paquets correspondant aux flux élémentaires du programme ou de l'événement) et le programme ou l'événement correspondant est visualisé sur l'écran.

Le procédé du zapping virtuel s'opère en plusieurs étapes. A la première pression de la touche P+ ou P-, le middleware notifie que le service doit changer en identifiant le nouveau service demandé au moyen du « service identifier ». La réponse ainsi que le service demandé sont ensuite transmis au middleware dans les 0,4 secondes. Si l'utilisateur ne relâche pas la touche, un mécanisme automatique basé sur un compteur du temps ou « timer » relance ce processus. Le procédé continue donc ainsi de suite et jusqu'à ce que l'utilisateur relâche la pression signifiant qu'il est satisfait avec le service ou le programme fourni. La figure 3 décrit le principal élément du module service serveur avec les points d'entrée (des fonctions ou 'méthodes') qu'il offre au module interface utilisateur (UI). Certaines de ces méthodes permettent à l'Ul de consulter la liste courante des services, de connaître les noms des services. Un couple de méthodes Lock/Unlock permet de suspendre/reprendre la mise à jour de la base de données depuis le flux pour que l'UI dispose temporairement d'une image cohérente (bien qu'éventuellement dépassée) de la liste des services.

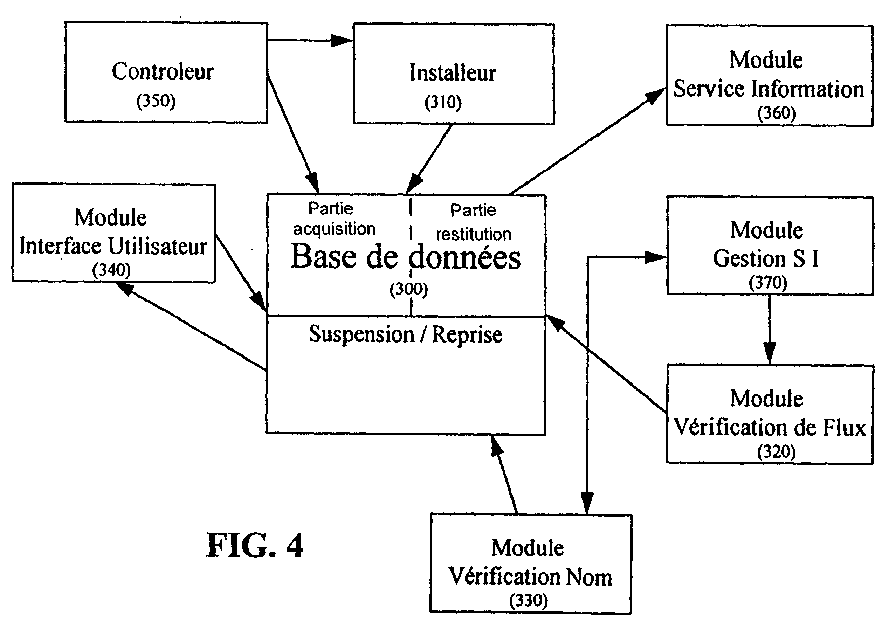

La figure 4 montre une représentation du module « service serveur » en modèle objet avec ses composants internes et ses liens avec des composants externes.

Le module du service serveur comprend un composant principal qui est une base de données (300). Il communique avec trois autres composants que sont un installateur (310), un module de vérification de flux de données (320) et un module de vérification de noms (330).

Ces quatre composants sont par ailleurs en liaison avec un module de l'interface utilisateur (340), un contrôleur (350), un module du service information (360) de Open TV (ou système similaire) et un module de gestion des tables du service information (370) de Open TV.

Dans l'exécution des fonctions, l'installateur (310) efface en premier lieu la base de données (300); ceci est réalisé au moyen d'une fonction particulière. Puis il fait la comparaison entre plusieurs listes tirées des tables NIT et BAT de manière à prendre les éléments en commun et à obtenir des listes cohérentes. Ceci dépend bien sûr de l'environnement qui est mis en place. Dans le mode installation, le but est de savoir quand la base de données dispose des données complètes concernant certains services particuliers qui doivent être reconnus dès le début. La liste des services est chargée dès le démarrage (lue dans la NIT et BAT). Mais cette liste ne contient que les numéros des services et leur identification DVB, les informations «utilisateur» (décrivant les services de manière compréhensible par l'utilisateur: titre, abrégé...) ne sont pas encore chargées, ceci afin d'éviter d'attendre que toutes les données soient téléchargées. Ensuite, le mode de propagation permet de savoir si les données doivent être enregistrées immédiatement dans la base de données. Dès lors que le téléchargement des services est terminé, toutes les listes des services sont construites et la base de données disponible (base de données de restitution) est mise à jour. Un « timer » est enclenché pour envoyer un message notifiant que la base de données est ou sera remplie.

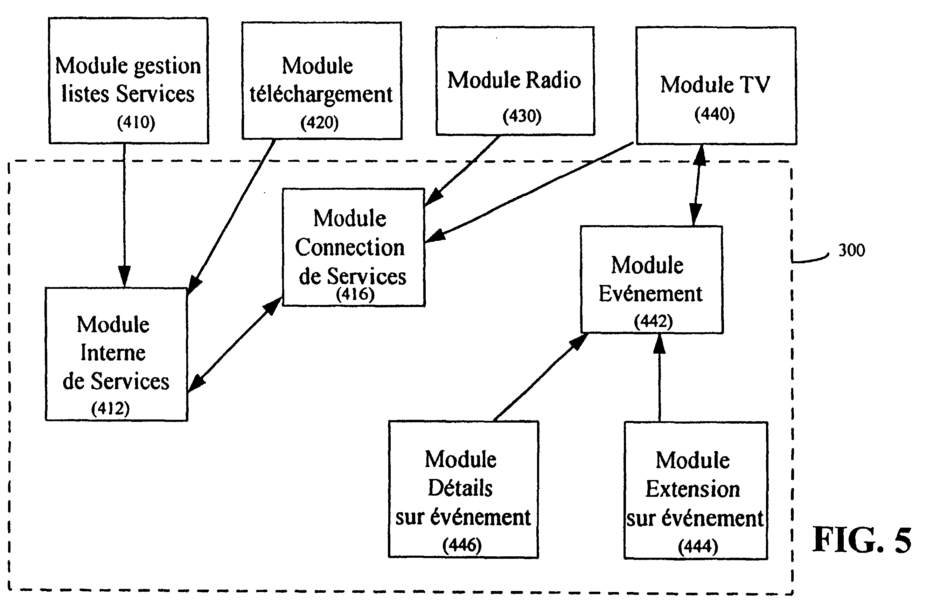

La base de données (300) dispose d'une structure qui lui permet de répondre rapidement aux commandes de l'utilisateur et dont une description détaillée est donnée à la figure 5. Pour ce faire, cette base de données doit être capable d'interpréter les instructions qui lui sont envoyées.

La fonction du contrôleur (350) est de coopérer avec le module installateur (310) pour initialiser la base de données (300). Cette dernière acquiert des informations sur le service information grâce au module du service information (360) du système Open TV. Une fois que ces informations sont acquises, elles peuvent être fournies au module de vérification de flux (320) et au module de vérification de noms (330).

Le module de vérification de nom (330) exécute les fonctions suivantes : Il traduit les noms du service dans un langage compréhensible du DVB-SI. Il informe le contrôleur que la connexion est établie. Puis il met à jour l'information dans le système de Open TV.

Le module de vérification de flux (320) quant à lui met à jour les informations pour chaque flux de données détecté figurant dans la liste des services qui sont à la disposition de l'utilisateur.

Dès que les informations du service demandé sont acquises et que l'image est stable, la base de données (300) envoie un message au module interface utilisateur (340) notifiant que la transmission est prête. Ce dernier procède alors à la lecture de la base de données pour faire visualiser le service ou le programme demandé sur l'écran.

La figure 4 représente l'architecture interne de la base de données du service serveur ainsi que ses liens avec les flux de données.

La base de données peut être divisée en deux parties. La première partie concerne l'acquisition des informations à partir du module de service (360) du système Open TV et de traiter aussi des messages de notifications de sorte que les informations reçues et stockées dans cette première partie ne sont pas stables mais en constante évolution avec la mise à jour du flux. La seconde partie stocke l'image de ces données destinée à la restitution auprès de l'utilisateur.. Elle est contrôlée par la partie d'acquisition, et les données sont basculées de la partie d'acquisition vers la partie restitution à des moments particuliers. Le but de la partie restitution est de fournir une copie des données du flux DVB aussi stable que possible. De ce fait, elle assume une double fonction. D'une part, elle administre les requêtes de l'utilisateur et fournit un tri de la base de données. D'autre part, elle assure le rôle de base de données dont la structure a vocation à être identique à celle de la partie d'acquisition. Pour cela, le contenu de la partie acquisition est bien entendu relié à la partie restitution.

Cette base de données (300) met en oeuvre plusieurs classes, chaque classe correspondant à un objet particulier de l'information de service. Chaque classe comporte une liste de méthodes permettant la constitution de la base de données pour cette classe. Les méthodes permettent notamment d'indiquer quels paramètres des descripteurs sont à mémoriser pour chaque objet.

Dans sa constitution, cette base de données comprend plusieurs composants : un module interne de service (412) associé à un module de connexion de service (416). Ces modules contiennent des données qui peuvent être accédées par un module dédié à la télévision (440), un module dédié à la radio (430), un module dédié au téléchargement (420) et un module gestion des listes de service (410). Le module dédié à la télévision accède aussi aux données d'un module d'événement (442) qui peut à son tour être associé à d'autres modules contenant des données annexes sur les événements. Il s'agit par exemple des modules contenant les détails (446) ou les extensions (444) sur les événements.

Comme il a été mentionné précédemment, ces modules ne contiennent pas tous des informations qui sont nécessaires immédiatement. Seuls le module service (412), le module connexion de service (416), et le module événement (442) en contiennent.

Le module service (412) enregistre effectivement des informations sur l'identification du réseau d'origine, du transpondeur, du service, de la chaîne ainsi des informations sur le type de DVB etc.

Le module de connexion de service (416) contient des informations sur le type de connexion, le nom de la connexion, l'identification de la chaîne de connexion et le type de connexion DVB.

Le module événement (442) contient quant à lui les informations sur l'identification de l'événement, le début de l'événement, la durée, le nom de l'événement, et son statut.

Telle que constituée, la base de données (300) est sujette à différentes manipulations.

Lorsque la liste des services change, c'est notamment le cas lorsque la table BAT ou NIT change, la base de données (partie acquisition) est effacée et la liste de services est reconstruite pour tous les services. La partie restitution est mise à jour lorsque la liste entière des services a été reçue par la base de données, partie acquisition. Cette mise à jour a lieu lorsque la liste des services a été acquise, mais avant que les informations supplémentaires relatives à chaque service n'aient été démultiplexées.

Selon une variante de réalisation, la mise à jour de la partie restitution de la base de données est mise à jour après expiration d'un délai prédéterminé, par rapport au lancement de la mise à jour de la partie acquisition. Ceci permet d'éviter une trop longue attente de cette mise à jour dans le cas où l'acquisition de la liste de services est difficile.

Lorsqu'un service change dans le flux DVB, sa copie dans la partie acquisition de la base de données est mise à jour, ainsi que les données qui lui sont associées comme les informations relatives à sa connexion, i.e. l'adresse du service dans le réseau de télévision. La partie restitution n'est mise à jour que lorsqu'un message particulier d'un élément logiciel du décodeur, par exemple une application, le demande.. Ceci se présente notamment, dans le cas où la table d'information des événements « EIT » change dans le flux DVB.

Ainsi, selon le type d'information de service, la mise à jour de la partie restitution est soit automatique, soit n'est effectuée que sur requête spécifique. Il est ainsi possible d'éviter des mises à jour intempestives pouvant se traduire par des problèmes de comportement de certaines applications qui ne sont pas prévues pour traiter des changements brusques dans les données de service. En particulier, si toutes les mises à jour relatives aux informations d'un service donné ne sont pas effectuées en même temps dans la partie restitution, alors des incohérences peuvent apparaître transitoirement entre des donnes mises à jour et des données qui ne le sont pas encore.

Selon un mode de réalisation particulier de l'invention, le fait que la mise à jour de la partie restitution, suite à une mise à jour de la partie acquisition, se fasse de façon immédiate ou sur requête, peut être programmé au niveau des classes correspondant à chaque type d'information.

Lorsque le service en cours change, les informations spécifiques connectées au service sont mises à jour dans la partie acquisition des données. La base de données disponible (c'est à dire la partie restitution) n'est mise à jour que quand l'occasion se présente.

Le message de mise à jour de la base de données a pour but de mettre à jour la totalité de la base de données. La mise à jour débute tout d'abord pour chaque service puis ensuite pour le service en cours. Après la modification de la base de données, le mode de propagation démarre afin d'accélérer la modification. Un message est alors envoyé à l'utilisateur pour l'informer que la totalité de la base de données a été modifiée.

Le couple de méthodes Lock/Unlock permet de suspendre/reprendre la mise à jour de la base de données depuis le flux. Ainsi l'interface utilisateur dispose d'une image cohérente de la liste des services.

Il est important de noter que le terme de décodeur est utilisé dans cette description de manière générique. Il peut être remplacé par un boîtier de composants électroniques dont les fonctionnalités sont celles par un exemple d'un « network computer » qui est relié à un réseau de téléphone ou de télécommunication quelconque.

## Revendications

1. Procédé de gestion de données de service dans un système de télévision dans lequel sont transmises lesdites données de service, comportant une étape d'acquisition de données de service contenant au moins une liste de services diffusés et une étape de stockage des données acquises dans une première base de données (300.1) d'un récepteur **caractérisé en ce qu'**il comporte les étapes :
**caractérisé en ce qu'**il comporte en outre les étapes :
- de copie de données de service stockées dans ladite première base de données vers une seconde base de données (300.2) du récepteur pour la mise à jour de ladite seconde base, copie suspendue pendant l'acquisition d'une nouvelle liste de services ; ladite seconde base de données possédant la même structure que la première;
- de mise à disposition des données stockées dans ladite seconde base de données à au moins une application dudit récepteur. »

2. Procédé selon la revendication 1, **caractérisé en ce que** la mise à jour de la seconde base de données est effectuée immédiatement après acquisition d'une nouvelle liste de services.

3. Procédé selon la revendication 1 ou 2, **caractérisé en ce que** la mise à jour de la seconde base de données est effectuée après un intervalle de temps prédéterminé après une requête de mise à jour d'une nouvelle liste de services.

4. Procédé selon l'une des revendications 1 à 3, **caractérisé en ce que** la mise à jour de la seconde base de données est effectuée uniquement suite à une requête d'une application.

5. Procédé selon l'une des revendications 1 à 4, **caractérisé en ce que** le moment de la mise à jour selon l'une des revendications 1 à 4 est fonction du type de la donnée de service.

6. Procédé selon l'une des revendications précédentes, **caractérisé en ce qu'**il comporte en outre les étapes:
- d'acquisition de la liste des services diffusés et d'informations supplémentaires relatives aux services de ladite liste ;
- de stockage des informations dans la première base de données et de mise à jour de la seconde base de données ;
- en cas de détection de changement d'un service, acquisition de nouvelles informations supplémentaires relatives à ce service et suspension de la mise à jour de la seconde base avec les nouvelles informations supplémentaires jusqu'à une requête d'une application.

7. Récepteur de télévision dans un système de télévision à transmission de données de service, caractérisé en qu'il comprend :
- des moyens d'acquisition de données de service comprenant au moins une liste de services diffusés ;
- des moyens de stockage de données de service dans une première base de données ;
- des moyens de stockage de données de service dans une seconde base de données ladite seconde base de données possédant la même structure que la première base de données ;
- des moyens de suspension de la mise à jour de la seconde base de données à partir de la première base de données, la suspension s'effectuant pendant l'acquisition d'une nouvelle liste de services.

## Patentansprüche

1. Verfahren zur Verwaltung von Servicedaten in einem Fernsehsystem, in dem die Servicedaten übertragen werden, mit einem Schritt zur Erfassung der Servicedaten mit wenigstens einer Liste von gesendeten Serviceleistungen und einem Schritt zur Speicherung der in einer ersten Datenbank (300.1) eines Empfängers erfaßten Speicherdaten,
**gekennzeichnet durch** folgende Schritte:
- Kopie von in der ersten Datenbank gespeicherten Servicedaten zu einer zweiten Datenbank (300.2) des Empfängers zur Aktualisierung der zweiten Bank, wobei die zweite Datenbank dieselbe Struktur wie die erste Datenbank aufweist,
- Bereitstellung von in der zweiten Datenbank gespeicherten Daten für wenigstens eine Anwendung des Empfängers.

2. Verfahren nach Anspruch 1, **dadurch gekennzeichnet, dass** die Aktualisierung der zweiten Datenbank unmittelbar nach der Erfassung einer neuen Serviceliste erfolgt.

3. Verfahren nach Anspruch 1 oder 2, **dadurch gekennzeichnet, dass** die Aktualisierung der zweiten Datenbank nach einem vorbestimmten Zeitintervall nach einer Anforderung für die Erfassung einer neuen Serviceliste erfolgt.

4. Verfahren nach einem der Ansprüche 1 bis 3, **dadurch gekennzeichnet, dass** die Aktualisierung der zweiten Datenbank nur aufgrund einer Anforderung einer Anwendung erfolgt.

5. Verfahren nach einem der Ansprüche 1 bis 4, **dadurch gekennzeichnet, dass** der Zeitpunkt der Aktualisierung nach einem der Ansprüche 1 bis 4 abhängig von dem Typ der Servicedaten abhängig ist.

6. Verfahren nach einem der vorangehenden Ansprüche, **gekennzeichnet durch** folgende Schritte:
- Erfassung der Liste der gesendeten Serviceleistungen und zusätzlichen Informationen für die Serviceleistungen dieser Liste,
- Speicherung von Informationen in der ersten Datenbank und Aktualisierung der zweiten Datenbank,
- im Falle der Detektion einer Änderung eines Service Erfassung der zusätzlichen neuen Informationen für diesen Service und Suspension der Aktualisierung der zweiten Bank mit den neuen zusätzlichen Informationen bis zu einer Anforderung einer Anwendung.

7. Fernsehempfänger in einem Fernsehsystem mit Übertragung von Servicedaten, **gekennzeichnet durch**:
- Mittel zur Erfassung von Servicedaten mit wenigstens einer Liste von gesendeten Servicediensten,
- Mittel zur Speicherung von Servicedaten in einer ersten Datenbank,
- Mittel zur Speicherung von Servicedaten in einer zweiten Datenbank,
wobei die zweite Datenbank denselben Aufbau wie die erste Datenbank aufweist,
- Mittel zur Suspension der Aktualisierung der zweiten Datenbank aus der ersten Datenbank,
wobei die Suspension während der Erfassung einer neuen Serviceliste erfolgt.

## Claims

1. Process for managing service data in a television system in which the said service data are transmitted, comprising a step of acquiring service data containing at least one list of services transmitted and a step of storing the data acquired in a first database (300.1) of a receiver, **characterized in that** it comprises the steps:
- of copying service data stored in the said first database to a second database (300.2) of the receiver for the updating of the said second database, the copying suspended during the acquisition of a new list of services; the said second database having the same structure as the first;
- of making the data stored in the said second database available to at least one application of the said receiver.

2. Process according to Claim 1, **characterized in that** the updating of the second database is performed immediately after acquiring a new list of services.

3. Process according to Claim 1 or 2, **characterized in that** the updating of the second database is performed after a predetermined time interval after a request for updating a new list of services.

4. Process according to one of Claims 1 to 3, **characterized in that** the updating of the second database is performed only following a request of an application.

5. Process according to one of Claims 1 to 4, **characterized in that** the moment of the update according to one of Claims 1 to 4 is dependent on the type of the service datum.

6. Process according to one of the preceding claims, **characterized in that** it furthermore comprises the steps:
- of acquiring the list of services transmitted and of supplementary information relating to the services of the said list;
- of storing the information in the first database and of updating the second database;
- should a change of service be detected, acquiring new supplementary information relating to this service and suspending the updating of the second base with the new supplementary information until a request of an application.

7. Television receiver in a television system with transmission of service data, **characterized in that** it comprises:
- means for acquiring service data comprising at least one list of services transmitted;
- means for storing service data in a first database;
- means for storing service data in a second database;
the said second database having the same structure as the first database;
- means for suspending updating of the second database from the first database, the suspension taking place during the acquisition of a new list of services.
